# EUROPEAN PATENT APPLICATION

(11) **EP 4 104 961 A1**
(43) Date of publication of application: **21.12.2022**
(21) Application number: 21020320.4
(22) Date of filing: 16.06.2021
(51) Int. Cl.: B23K 9/025, B23K 9/173, B23K 9/08, B23K 9/02, B23K 9/16

(54) **LOW EMISSION ARC WITH CORGON 18 PENETRATION**

(71) Applicant: Linde GmbH, 82049 Pullach (DE)
(72) Inventor: Siewert, Erwan, Niederlauterbach (DE)
(74) Representative: Lu, Jing

(57) **Abstract**

The present invention relates to a welding apparatus (1), comprising a torch (2) comprising a gas nozzle (8) for discharging a welding gas (G) to protect a weld pool (32), the torch further comprising a current contact nozzle (6) through which a wire (3) is transportable towards the weld pool (32), a gas source (5) for storing the welding gas (G), the gas source (5) being connectable to the gas nozzle (8) so that the welding gas (G) can flow from the gas source (5) to the gas nozzle (8) to be discharged out of the torch (2) via the gas nozzle (8), a power supply (11) electrically connectable to the current contact nozzle (6) to generate an electrical current through the wire (3) for generating an arc (9) to cause the wire (3) to transfer material of the wire (3) towards the weld pool (32) in form of droplets (30), the arc (9) extending along a main arc axis (A), wherein the welding apparatus (1) further comprises a droplet deflecting unit (7) configured to deflect the droplets (30) in a direction (R) perpendicular to said main arc axis (A), and wherein the welding gas comprises a CO₂ content of less than 18 Vol.-%

## Description

The present invention relates to a welding apparatus and to a welding method.

The standard gas for welding mild steel in Europe is Corgon18 (18% CO₂ rest argon). In the USA, however, a mixture of 25% CO₂ and the rest argon is still frequently used. Corgon 18 can be used universally and shows a very good compromise between penetration, spatter formation and oxidation.

Reducing emissions during welding or the exposure of welders is becoming increasingly important as new findings on the hazard situation become available. For example, the WHO recently classified particulate emissions as carcinogenic regardless of their composition (welding fumes are carcinogenic to humans (see IARC Monographs 2017, Volume 100/B).

Furthermore, permissible limits are steadily reducing, such as the workplace limit for manganese in Germany at the beginning of 2019. Therefore, new technologies are necessary to be able to use arc welding in the future.

Particulate emissions during MSG welding of mild steel and stainless steel can be reduced by reducing the CO₂ content in the welding gas. However, this also reduces the flank penetration of the weld seam. This can be particularly critical when welding fillet welds.

The causes of the reduced penetration are largely understood. In addition to the energy input from the arc, the strongly overheated droplets contribute energy, which leads to melting of the base material and formation of the weld pool. Thicker layers of liquid melt result in the energy not being introduced to depth and the penetration decreases. When the liquid droplets impact, the melt is displaced by the kinetic energy of the droplets as they hit the molten weld pool.

Welding gases with a higher CO₂ content exert a counterpressure on the welding wire and thus on the droplet during detachment (also called "pinch-off"). This causes the droplet to be deflected and the droplet transfer to occur outside the main arc axis. As a result, the droplets are distributed over a wider area in the weld pool. As a result, there is a wide penetration, as, for example, with the use of Corgon 18.

If the CO₂ content is reduced, the pressure on the droplets decreases, so that the material transfer takes place predominantly via the main arc axis. Consequently, the droplets all hit one spot, displacing the melt and leading to a concentrated and deep penetration in the center. The so-called argon finger is formed. Since hardly any drops hit the weld seam flanks, the penetration decreases here.

The problem is to still achieve a good (safe) penetration with low emissions. The use of a welding gas with a low proportion of CO₂ and O₂ (especially CO₂) however leads to a reduction in the penetration at the weld flank.

Therefore, the problem to be solved by the present invention is to provide a welding apparatus and a welding method that ensures burn-in on the flanks when using a welding gas with a relatively low content of active gases (especially CO₂).

This problem is solved by a welding apparatus having the features of claim 1 and by a welding method having the features of claim 11. Preferred embodiments of the respective aspect of the present invention are stated in the corresponding dependent claims and are described below.

According to claim 1 a welding apparatus is disclosed, comprising
- a torch comprising a gas nozzle for discharging a welding gas to protect a weld pool, the torch further comprising a current contact nozzle through which a wire is transportable towards the weld pool,
- a gas source storing a welding gas, the gas source being connectable to the gas nozzle so that the welding gas can flow from the gas source to the gas nozzle to be discharged out of the torch via the gas nozzle,
- a power supply electrically connectable to the current contact nozzle to generate an electrical current through the wire for generating an arc to cause the wire to transfer material of the wire towards the weld pool in form of droplets, the arc extending along a main arc axis,
wherein the welding apparatus further comprises a droplet deflecting unit configured to deflect the droplets in a direction perpendicular to said main arc axis so as to improve flank penetration of the weld seam, and wherein the gas comprises a CO₂ content of less than 18 Vol.-%.

In an embodiment of the welding apparatus, the droplet deflecting unit is configured to move the current contact nozzle to deflect the droplets in said direction.

Furthermore, according to an embodiment, the droplet deflecting unit is configured to generate a magnetic field to deflect the droplets in said direction. Particularly, the magnetic field acts on the arc that in turn causes deflection of the droplets.

Further, according to an embodiment, the droplet deflecting unit is configured to generate a gas flow to deflect the droplets in said direction.

In an embodiment of the welding apparatus according to the present invention, the torch is movable in a welding direction to generate a weld seam extending along the welding direction, wherein the droplet deflecting unit is configured to deflect the droplets at right angles to the welding direction.

Further, in an embodiment of the welding apparatus, the welding apparatus is configured to connect an upper sheet to a lower sheet by way of a weld seam generated with the welding apparatus, wherein the deflection unit is configured to be adjusted by a user to set a ratio between an amount of droplets deflected towards the upper sheet and an amount of droplets deflected towards the lower sheet.

Further, according to an embodiment, the torch comprises a manually operable control element operatively connected to the droplet deflection unit, the control element being configured to be actuated by a user to adjust said ratio and/or to adjust an intensity of the droplet deflection (corresponding e.g., to a distance the droplets will be deflected perpendicular to the main arc axis when joining the weld pool).

Furthermore, according to an embodiment of the welding apparatus, the droplet deflecting unit is configured to deflect the droplets with an adjustable frequency, wherein preferably the frequency is linked to a pulse frequency of the arc or to a wire feed speed of the wire. This frequency is the droplet deflection per time, e.g., in the case of a magnetic field the changes of the magnetic field strength or direction per time. Particularly, in pulsed mode, the welding current is pulsed in a frequency that is adapted to the wire feed rate (the higher the feed rate, the higher the pulse frequency). The deflection frequency needs to be adjusted and synchronized to this pulse frequency, to ensure that, e.g., the droplet has just detached before the deflection pulse occurs. Otherwise, it could happen that the deflection pulse occurs in a moment no droplet is formed nor detached resulting in no impact. If the welding is operated in non-pulsed mode, e.g., spray arc, the detachment happens within a "natural" frequency that is a function of the wire feed rate, the wire diameter and the welding gas. Also, here, the deflection pulse needs to happen at the right time, shortly before or after the droplet detachment happens.

Furthermore, in an embodiment, the frequency may also be automatically set to an optimal value. Particularly, suitable electrical signals like the current and the voltage can be used to detect the best timing to create the deflection pulse. The deflection will in turn result in changes in the current and voltage that can be used to see if the deflection timing, strength and duration lies in an optimum window. If not, the system will adjust these parameters to reach an optimal value. The optimum value is determined before and saved as a pattern in the system. Furthermore, it can also be optimized to a line scan of the plates to be welded as described further below.

Further, in an embodiment of the welding apparatus, for adjusting a direction of deflection of the droplets by the droplet deflecting unit with respect to a welding direction, the gas nozzle is rotatable (e.g., about a longitudinal axis of the torch which can coincide with the main arc axis).

Furthermore, in an embodiment, the torch can comprise a marking or a line laser for indicating the welding direction. According to yet another embodiment, the welding apparatus can be configured to align the deflection of the droplets automatically by determining a movement of the torch in the welding direction. Furthermore, in an embodiment, the welding apparatus is configured to determine a seam formation (e.g., by means of a line scanner) and the deflection is controlled accordingly. A target geometry can be specified.

Furthermore, according to a preferred embodiment, the welding gas comprises a CO₂ content less than or equal to 8 Vol.-%, preferably a CO₂ content in the range from 1 Vol.-% to 3 Vol.-% and/or wherein the welding gas comprises an oxygen content in the range from 0 Vol.-% to 3 Vol.-%.

Yet another aspect of the present invention relates to a welding method. According thereto, a welding method is disclosed, wherein the welding method preferably uses a welding apparatus according to the present invention, wherein the welding method comprises:
- generating a weld seam (preferably with the welding apparatus according to the invention) between an upper sheet and a lower sheet by transferring droplets of material of a wire to a weld pool generated on the sheets with an arc generated between the wire and the sheets,
- deflecting droplets perpendicular to the main axis of the arc to improve penetration of the weld seam on opposing flanks of the weld seam,
- protecting the weld pool by discharging a welding gas onto the weld pool, the welding gas comprising a CO₂ content of less than 18 Vol.-%.

Preferably, according to an embodiment of the method, the droplets are deflected at right angles to a welding direction along which the weld seam is generated.

Further, in an embodiment of the method, a ratio between an amount of droplets deflected towards the upper sheet and an amount of droplets deflected towards the lower sheet is adjusted and/or wherein an intensity of the deflection of the droplets is adjusted by a user, e.g., by the welding operator.

Furthermore, in an embodiment of the method, the droplets are deflected with an adjustable frequency, wherein preferably the frequency is linked to a pulse frequency of the arc or to a wire feed speed of the wire (see also above).

According to yet a further embodiment of the method, the welding gas comprises a CO₂ content less than or equal to 8 Vol.-%, preferably a CO₂ content in the range from 1 Vol.-% to 3 Vol.-% and/or wherein the welding gas comprises an oxygen content in the range from 0 Vol.-% to 3 Vol.-%.

In the following, embodiments as well as further features and advantages of the present invention shall be described with reference to the Figures, wherein
- Fig. 1: shows a schematical illustration of an embodiment of a welding apparatus according to the present invention, and
- Figs. 2A - 2B: show the penetration of a weld seam using different welding gases (e.g., 18 Vol.-% CO₂ in Fig. 2A and 5 Vol.-% CO₂ in Fig. 2B).

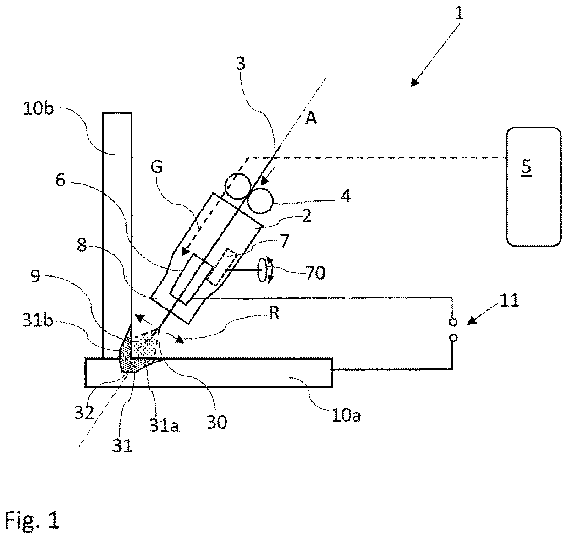

Fig. 1 shows an embodiment of a welding apparatus 1 according to the present invention that uses a welding gas G that can be stored in a suitable gas source 5 and comprises a low proportion of active gas components. Preferably, the CO₂ content is less than 18 Vol.-% and in particular less than or equal to 8 Vol.-% and particularly advantageously in the range from 1 Vol.-% to 3 Vol.-%. The proportion of oxygen is preferably between 0 Vol.-% and 3 Vol.-%.

Furthermore, the welding apparatus 1 comprises a moveable torch 2 comprising a gas nozzle 8 for discharging the welding gas G specified above to protect a weld pool 32 that is generated by means of an arc 9. The torch 2 further comprising a current contact nozzle 6 through which a wire 3 is transportable towards the weld pool 32. For transporting the wire 3, so that the wire 3 can be fed towards the weld pool 32, the welding apparatus 1 comprises a wire feed unit 4 that moves the wire 3 forward.

As indicated in Fig. 1, the gas source 5 storing the welding gas G can be brought into flow connection with the gas nozzle 8 so that the welding gas G can flow from the gas source 5 to the gas nozzle 8 to be discharged out of the torch 2 via the gas nozzle 8 onto the weld pool 32.

Furthermore, the apparatus 1 comprises a power supply 11 being electrically connectable to the current contact nozzle 6 to generate an electrical current through the wire 3 for generating said arc 9 to cause the wire 3 to transfer material of the wire 3 towards the weld pool 32 in form of droplets 30. Particularly, the arc 9 extends along a main arc axis A.

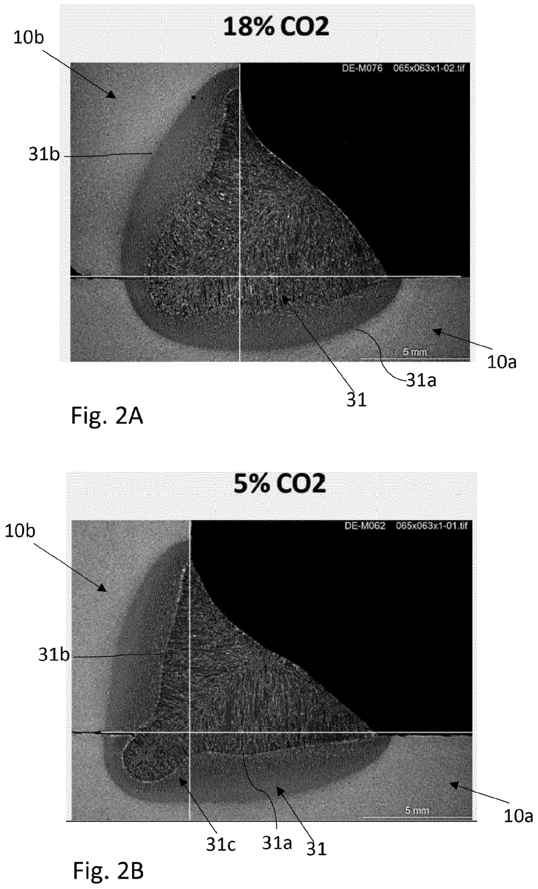

Generally, one would like to achieve a penetration of the weld seam 31 at its flanks 31a and 31b as shown in Fig. 2A where a welding gas G is used having a CO₂ content of 18 Vol.-%. As shown in Fig. 2B, a lower CO₂ content can deteriorate penetration causing a so-called argon finger 31c (the rest of the gas G being used is argon).

In order to still achieve good penetration at the flanks 31a, 31b (particularly important when welding fillet welds), the weld droplets 30 are deflected by means of a droplet deflecting unit 7. The droplet deflecting unit 7 can operate mechanically, e.g., by moving the current contact nozzle 6, or can generate a suitable gas flow or a magnetic field in order to deflect the droplets 30 transferred from the wire 3 to the weld pool 32 upon welding.

Preferably, when welding a weld seam 31 as shown in Fig. 1, the droplets 30 are deflected at right angles to the welding direction. Since the penetration on the lower sheet 10a is often less than on the upper sheet 10b (depending on the orientation of the welding torch 2), the droplets 30 are deflected in a particularly advantageous manner, namely e.g., in such a way that they impinge more frequently on the lower sheet 10a than on the upper sheet 10b, thus compensating for the lower penetration on the lower sheet 10a.

Preferably, on the welding torch 2, a control element (e.g., rotary wheel) is provided, by means of which the welder can easily adjust the deflection of the droplets 30. For this, the control element 70 is operatively coupled to the droplet deflecting unit 7 to allow adjustment of the deflection. Particularly, the welder can set the ratio between the amount (particularly number) of droplets 30 deflected towards the upper sheet 10b and the amount (particularly number) of droplets 30 deflected towards the lower sheet 10a as well as the intensity of the deflection. Optionally, the frequency of the deflection can also be set. The deflection can also be linked to the pulse frequency during pulsed arc mode or generally to the wire feed speed and automatically set to the optimum value.

Furthermore, the alignment of the droplet deflecting unit 7 for deflection of the welding droplets 30 (e.g. magnetic field) to the welding direction can be done in an embodiment by rotating the gas nozzle 8. A marking or a line laser can indicate the welding direction. The alignment can also be done automatically by determining the welding movement. Furthermore, the seam formation can be determined, e.g., by a line scanner and the deflection is controlled accordingly. A target geometry can be specified.

The present invention offers the advantage of low particulate emissions and compliance with limit values. Particularly, protection of the welder is improved. Furthermore, a low oxidation, low amount of rework and low soot on the sheets can be achieved. Furthermore, spatter formation can be decreased and a reliable penetration (uniform fusion penetration) can be achieved with a lower amount of active gas (e.g. CO₂).

## Claims

1. A welding apparatus (1), comprising
- a torch (2) comprising a gas nozzle (8) for discharging a welding gas (G) to protect a weld pool (32), the torch further comprising a current contact nozzle (6) through which a wire (3) is transportable towards the weld pool (32)
- a gas source (5) for storing the welding gas (G), the gas source (5) being connectable to the gas nozzle (8) so that the welding gas (G) can flow from the gas source (5) to the gas nozzle (8) to be discharged out of the torch (2) via the gas nozzle (8),
- a power supply (11) electrically connectable to the current contact nozzle (6) to generate an electrical current through the wire (3) for generating an arc (9) to cause the wire (3) to transfer material of the wire (3) towards the weld pool (32) in form of droplets (30), the arc (9) extending along a main arc axis (A),
wherein the welding apparatus (1) further comprises a droplet deflecting unit (7) configured to deflect the droplets (30) in a direction (R) perpendicular to said main arc axis (A), and wherein the welding gas comprises a CO₂ content of less than 18 Vol.-%.

2. The welding apparatus according to claim 1, wherein the droplet deflecting unit (7) is configured to move the current contact nozzle (6) to deflect the droplets (30).

3. The welding apparatus according to claim 1, wherein the droplet deflecting unit (7) is configured to generate a magnetic field to deflect the droplets (30).

4. The welding apparatus according to claim 1, wherein the droplet deflecting unit (7) is configured to generate a gas flow to deflect the droplets (30).

5. The welding apparatus according to one of the preceding claims, wherein the torch (2) is movable in a welding direction to generate a weld seam (31) extending along the welding direction, wherein the droplet deflecting unit (7) is configured to deflect the droplets (30) at right angles to the welding direction.

6. The welding apparatus according to one of the preceding claims, wherein the welding apparatus (1) is configured to connect an upper sheet (10b) to a lower sheet (10a) by way of a weld seam (31) generated with the welding apparatus (1), wherein the droplet deflecting unit (7) is configured to be adjusted by a user to adjust a ratio between an amount of droplets (30) deflected towards the upper sheet (10b) and an amount of droplets (30) deflected towards the lower sheet (10a).

7. The welding apparatus according to claim 6, wherein the torch (2) comprises a manually actuable control element (70) operatively connected to the droplet deflecting unit (7), the control element (70) being configured to be actuated by a user to adjust said ratio and/or to adjust an intensity of the droplet deflection.

8. The welding apparatus according to one of the preceding claims, wherein the droplet deflecting unit (7) is configured to deflect the droplets (30) with an adjustable frequency, wherein preferably the frequency is linked to a pulse frequency of the arc (9) or to a wire feed speed of the wire (3).

9. The welding apparatus according to one of the preceding claims, wherein for adjusting a direction of deflection of the droplets (30) by the droplet deflecting unit (7) with respect to a welding direction, the gas nozzle (8) is rotatable.

10. The welding apparatus according to one of the preceding claims, wherein the welding gas (G) comprises a CO₂ content less than or equal to 8 Vol.-%, preferably a CO₂ content in the range from 1 Vol.-% to 3 Vol.-% and/or wherein the welding gas (G) comprises an oxygen content in the range from 0 Vol.-% to 3 Vol.-%.

11. A welding method, particularly using a welding apparatus (1) according to one of the preceding claims, wherein the method comprises:
- generating a weld seam (31) between an upper sheet (10b) and a lower sheet (10a) by transferring droplets (30) of material of a wire (3) to a weld pool (32) generated on the sheets (10b, 10a) with an arc (9) generated between the wire (3) and the sheets (10b, 10a),
- deflecting droplets (30) in a direction (R) perpendicular to the main axis (A) of the arc to improve penetration of the weld seam (31) on opposing flanks (31a, 31b) of the weld seam (31),
- protecting the weld pool (32) by discharging a welding gas (G) onto the weld pool (32) the welding gas (G) comprising a CO₂ content of less than 18 Vol.-%.

12. The welding method according to claim 11, wherein the droplets (30) are deflected at right angles to a welding direction.

13. The welding method according to claim 11 or 12, wherein a ratio between an amount of droplets (30) deflected towards the upper sheet (10b) and an amount of droplets (30) deflected towards the lower sheet (10a) is adjusted and/or wherein an intensity of the deflection of the droplets (30) is adjusted.

14. The welding method according to one of the claims 11 to 13, wherein the droplets (30) are deflected with an adjustable frequency, wherein preferably the frequency is linked to a pulse frequency of the arc (9) or to a wire feed speed of the wire (3).

15. The welding method according to one of the claims 11 to 14, wherein the welding gas (G) comprises a CO₂ content less than or equal to 8 Vol.-%, preferably a CO₂ content in the range from 1 Vol.-% to 3 Vol.-% and/or wherein the welding gas comprises an oxygen content in the range from 0 Vol.-% to 3 Vol.-%.
